# EUROPÄISCHE PATENTSCHRIFT

(11) **EP 4 220 626 B1**
(45) Veröffentlichungstag und Bekanntmachung des Hinweises auf die Patenterteilung: **11.12.2024**
(21) Anmeldenummer: 22305101.2
(22) Anmeldetag: 28.01.2022
(51) Int. Cl.: G10K 11/178

(54) **VORRICHTUNG ZUR DÄMPFUNG VON MECHANISCHEN SCHWINGUNGEN IN VON MODULIERTEN STRÖMEN DURCHFLOSSENEN ELEKTRISCHEN LEITUNGEN**
DEVICE FOR DAMPING MECHANICAL VIBRATIONS IN ELECTRIC LINES THROUGH WHICH MODULATED CURRENTS FLOW
DISPOSITIF D'AMORTISSEMENT DES VIBRATIONS MÉCANIQUES DES CONDUITES ÉLECTRIQUES TRAVERSÉES PAR DES COURANTS MODULÉS

(43) Veröffentlichungstag der Anmeldung: 02.08.2023
(73) Patentinhaber: Nexans, 92400 Courbevoie (FR)
(72) Erfinder: FENEIS, Michael, 92685 FLOSS (DE); STEINBERG, Helmut, 92685 FLOSS (DE)
(74) Vertreter: Ipsilon

(56) Entgegenhaltungen:
- US-A- 5 427 102
- US-A1- 2021 082 388

## Beschreibung

### Gebiet

Die Erfindung betrifft die Dämpfung von mechanischen Schwingungen in elektrischen Leitungen, insbesondere von elektrischen Zuleitungen zu Antriebskomponenten von Elektro- und Hybridfahrzeugen.

### Hintergrund

Elektrische Ströme in Antriebskomponenten von Elektro- und Hybridfahrzeugen, also bspw. Motoren und Batterien, werden in der Regel von einer Leistungselektronik gesteuert. Dabei wird üblicherweise eine modulierte, bspw. gepulste Ansteuerung genutzt, etwa eine Pulsweitenmodulation, u.a. um die elektrischen Verluste klein zu halten und dennoch eine gute Leistungsregelung zu erreichen.

Die in Antriebskomponenten von Elektro- und Hybridfahrzeugen umgesetzten Leistungen liegen nicht selten im hohen zwei oder sogar dreistelligen Kilowatt-Bereich, so dass selbst bei hohen Spannungen von 400 V oder auch 800 V noch Ströme von über 100 A fließen. Diese Ströme erzeugen in elektrischen Leitungen ein Magnetfeld, welches wiederum eine auf diese wirkende Kraft erzeugt. Hohe modulierte, insbesondere gepulste Ströme erzeugen ein mit der Frequenz der Modulation erzeugtes Magnetfeld, mit einer entsprechend wirkenden Kraft. Elektrische Leitungen in Elektro- und Hybridfahrzeugen werden in oder entlang von Karosserieteilen verlegt, und dort in bestimmten Abständen fixiert. Insbesondere zwischen den Fixierpunkten kann eine auf die elektrische Leitung wirkende Kraft diese bewegen. Eine pulsartig wirkende Kraft kann die elektrische Leitung demnach pulsartig bewegen. Bei entsprechender Frequenz der durch die Leitung fließenden elektrischen Ströme kann so durch Luft- und/oder Körperschall eine im von Menschen akustisch wahrnehmbaren Frequenzbereich liegende Schwingung entstehen.

Die US 5,427102 A1 offenbart aktive Geräuschunterdrückung in einen Magnetresonanztomographiegerät (MRT-Gerät). In dem MRT-Gerät entstehen durch pulsierende Ströme in einer Gradientenmagnetfeldspule Vibrationen, die von magnetischen Kräften verursacht werden und großen Lärm erzeugen, der für den untersuchten Patienten unangenehm ist. Um den Lärm zu unterdrücken oder zu reduzieren, wird mit einem Schallerzeuger ein akustisches Signal erzeugt oder die Gradientenmagnetfeldspule wird in Schwingungen versetzt, die Gegenschwingungen zu den lärmerzeugenden Vibrationen der Gradientenmagnetfeldspule sind.

Aus der US 2021/0082388 A1 ist eine Vorrichtung und ein Verfahren zur Lärmunterdrückung in einem Fahrzeug bekannt. Zu diesem Zweck sind im Inneren des Fahrzeuges Innenlautsprecher vorgesehen. Mit diesen Lautsprechern wird ein akustisches Feld erzeugt, so dass Geräusche im Innenraum unterdrückt werden. Weiterhin sind Aktuatoren ("shaker") vorgesehen, die Vibrationen erzeugen, die vibrationsakustische Effekte verhindern oder wenigstens reduzieren.

Hiervon ausgehend hat die vorliegende Erfindung die Aufgabe, eine Vorrichtung und ein Verfahren zu schaffen, um Schwingungen in von modulierten Strömen durchflossenen elektrischen Leitern zu dämpfen.

### Zusammenfassung der Erfindung

Diese Aufgabe wird durch die in Anspruch 1 angegebene Vorrichtung und das in Anspruch 6 angegebene Verfahren gelöst. Vorteilhafte Ausgestaltungen und Weiterentwicklungen sind in den jeweiligen abhängigen Ansprüchen beschrieben.

Eine Vorrichtung gemäß Anspruch 1 nach einem ersten Aspekt der Erfindung umfasst mindestens einen zu der Leitung hin ausgerichteten oder an der Leitung befestigen Schall- oder Schwingungsaufnehmer, mindestens einen mit der Leitung verbundenen Aktuator und eine Steuerschaltung. Die Steuerschaltung kann einen Mikroprozessor, mit diesem verbundenen flüchtigen und nichtflüchtigen Speicher, einen oder mehrere mit Schall- oder Schwingungsaufnehmern verbundene Mikrofoneingänge sowie einen oder mehrere mit Aktuatoren verbundene Steuerausgänge aufweisen. Der Steuerschaltung sind über jeweilige Signalleitungen von dem mindestens einen Schall- oder Schwingungsaufnehmer erzeugte, Schall oder Schwingungen repräsentierende Signale zugeführt. Über jeweilige Steuerleitungen steuert die Steuerschaltung den mindestens einen Aktuator so an, dass dieser der Schwingung der Leitung entgegenwirkt.

Der mindestens eine Aktuator kann bspw. einen elektromagnetischen oder piezoelektrischen Antrieb aufweisen, der von der Steuerschaltung so angesteuert wird, dass er eine der durch den Stromfluss erzeugten Kraft entgegenwirkende Kraft erzeugt. Der mindestens eine Aktuator ist dabei vorzugsweise so an einer Struktur angebracht, an oder in der die Leitung verlegt ist, dass von dem Aktuator ausgehende oder in diesen eingeleitete Schwingungen nur gedämpft in die Struktur eingeleitet werden oder zuvor ausgelöscht werden. Der Aktuator kann bspw. in einem elastisch dämpfenden Element gelagert sein.

Erfindungsgemäß ermöglicht der mindestens eine Schall- oder Schwingungsaufnehmer eine Ortsauflösung der Schwingungsamplitude entlang zumindest eines Teils der Leitung. Die Steuerschaltung ist dabei dazu eingerichtet, den mindestens einen Aktuator so anzusteuern, dass die maximale Schwingungsamplitude an einer Stelle entlang des Teils der Leitung verringert wird, der von dem Schall- oder Schwingungsaufnehmer erfasst wird. Dabei wird der von der Steuerschaltung Aktuator so angesteuert, dass die Verringerung der Schwingung der Leitung nicht notwendigerweise an der Stelle erfolgt, an welcher der Aktuator auf die Leitung einwirkt. Vielmehr kann der Aktuator selbst eine Schwingung in das Kabel einleiten, welche auf dem Wege der zerstörenden Interferenz eine durch den in der Leitung fließenden Strom erzeugte Schwingung stört und so zu einer insgesamt kleineren Schwingungsamplitude führt, oder eine Verschiebung der Frequenz der Schwingung erzeugt, welche als weniger störend empfunden wird oder durch andere konstruktive Maßnahmen gedämpft wird. Diese Ausgestaltung trägt dem Umstand Rechnung, dass ein Aktuator nicht immer an einem besonders für Schwingungen anfälligen Punkt der Leitung angeordnet werden kann.

Erfindungsgemäß ist der Schall- oder Schwingungsaufnehmer ein optisches Mikrofon. Optische Mikrofone können Änderungen des optischen Brechungsindexes innerhalb eines schwingenden Mediums erfassen, welche durch von Schwingungen erzeugte lokale Dichteänderungen hervorgerufen werden. Je nach Medium kann auch eine Lokalisierung der größten Amplitude entlang der Messstrecke erfolgen, bspw. in einer optischen Faser durch Zeitbereichsreflektometrie (engl. Time-Domain Reflectometry, kurz TDR).

Bei einer oder mehreren Ausgestaltungen wird der Steuerschaltung ein Signal zugeführt, welches Informationen über die Modulation, bspw. die Pulsfrequenz, die Pulsdauer, sowie über die Stromstärke des in der Leitung fließenden elektrischen Stroms repräsentiert. Ein solches Signal kann bspw. von einer Steuereinrichtung übertragen werden, welche den Strom in der Leitung regelt. Die Steuerschaltung nutzt diese Informationen, um den mindestens einen Aktuator mit einer Frequenz und/oder Phase anzuregen, welche der durch den Strom hervorgerufenen Schwingung entgegenwirkt. Bei diesen Ausgestaltungen können die Anforderungen an den Schall- oder Schwingungsaufnehmer bezüglich Empfindlichkeit oder Frequenzauflösung kleiner sein. Außerdem kann bei diesen Ausgestaltungen die Steuerschaltung in einer Lernphase den mindestens einen Aktuator mit einem Frequenzsweep ansteuern, also mit einem Wechselsignal, dessen Frequenz stetig einen vorgegebenen Bereich durchläuft, und mit dem mindestens einen Schall- oder Schwingungsaufnehmer die Amplitude und die Frequenz des durch die Schwingungen der Leitung hervorgerufenen akustisch wahrnehmbaren Schalls aufnehmen. Dabei kann eine Korrelation zwischen der Amplitude des wahrnehmbaren Schalls und dem zugrundeliegenden Strom in der Leitung gebildet werden. So kann auch ohne eine genaue Messung bereits in dem Moment, in dem die Leitung mit einem Strom beaufschlagt wird, der mindestens eine Aktuator mit einem geeigneten Steuersignal angesteuert werden. Messungen des Schalls oder der Schwingungen der Leitung können dann dazu genutzt werden, Veränderungen der Schwingungen der Leitung bei ansonsten gleichen Strömen, gleicher Modulation etc. zu erkennen, wie sie bspw. durch temperatur- oder alterungsbedingte Veränderungen der Materialien oder Ablagerungen von Schmutz auf der Leitung hervorgerufen werden. Anhand dieser Messungen kann dann die Korrelation angepasst bzw. erweitert werden, bspw. um die Temperatur. So kann mit Informationen eines Thermometers, bspw. eines Außenthermometers eines Kraftfahrzeugs, und des von der Steuereinrichtung übermittelten Signals gleich zu Beginn der Nutzung ein geeignetes Ansteuersignal für den mindestens einen Aktuator verwendet werden.

Die Vorrichtung kann insbesondere in Elektro- und Hybridfahrzeugen eingesetzt werden, um durch die Antriebssteuerung entstehende Schwingungen in elektrischen Leitungen zu dämpfen.

Ein Verfahren nach Anspruch 6 gemäß einem zweiten Aspekt der Erfindung umfasst das Erfassen, in einer Steuerschaltung, von Schwingungen einer von einem modulierten elektrischen Strom durchflossenen Leitung mittels mindestens eines Schall- oder Schwingungsaufnehmers. Die Steuerschaltung erzeugt basierend auf den erfassten Schwingungen der Leitung Steuersignale für mindestens einen Aktuator mit dem Ziel, die Schwingungen der Leitung zu dämpfen, und gibt diese aus. Das Verfahren kann in einer geschlossenen Regelschleife kontinuierlich ausgeführt werden.

Bei einer oder mehreren Ausgestaltungen des Verfahrens empfängt die Steuerschaltung ein Signal, welches Informationen über eine Stromstärke und eine Modulation des in der Leitung fließenden Stroms bereitstellt. Anhand der Informationen wählt die Steuerschaltung ein Steuersignal für den mindestens einen Aktuator aus einer Korrelationstabelle aus, und gibt dieses aus. Auch hierbei kann eine Wiederholung in einer kontinuierlichen Regelschleife erfolgen.

Bei einer oder mehreren Ausgestaltungen umfasst das Verfahren in einer Lernphase das Empfangen eines Signals, welches Informationen über eine Stromstärke und eine Modulation des in der Leitung fließenden Stroms bereitstellt. Die Steuerschaltung legt einen Frequenzsweep an mindestens einen Aktuator an und erfasst die Schwingungen der Leitung. Der Frequenzsweep und das Erfassen der Schwingung wird ggf. mit geänderter Amplitude des Steuersignals wiederholt. Aus dem so gewonnenen Kennfeld wird ein Steuersignal ermittelt, bei welchem die Schwingungen der Leitung maximal gedämpft werden, und das ermittelte Signal wird in einer Korrelationstabelle zusammen mit dem zugehörigen Strom in der Leitung und dessen Modulation gespeichert.

Ein Computerprogrammprodukt gemäß einem weiteren Aspekt der Erfindung enthält Programminstruktionen, die bei der Ausführung durch einen Prozessor einer mit mindestens einem Schall- oder Schwingungsaufnehmer und mindestens einem Aktuator verbundenen Steuerschaltung diese dazu veranlassen, eine oder mehrere Ausgestaltungen und Weiterentwicklungen des vorstehend beschriebenen Verfahrens ausführen.

Das Computerprogrammprodukt kann auf einem computerlesbaren Medium bzw. Datenträger gespeichert sein. Das Medium bzw. der Datenträger kann physisch verkörpert sein, bspw. als Festplatte, CD, DVD, Flash-Speicher oder dergleichen, das Medium bzw. der Datenträger kann aber auch ein moduliertes elektrisches, elektromagnetisches oder optisches Signal umfassen, das von einem Computer mittels eines entsprechenden Empfängers empfangen und in dem Speicher des Computers gespeichert werden kann.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine schematische Darstellung einer exemplarischen Vorrichtung zur Dämpfung von Schwingungen in von modulierten Strömen durchflossenen elektrischen Leitungen,
- Fig. 2: ein Flussdiagramm eines Ausführungsbeispiels des erfindungsgemäßen Verfahrens, und
- Fig. 3: ein exemplarisches Blockdiagramm einer zur Ausführung eines oder mehrerer Aspekte des erfindungsgemäßen Verfahrens eingerichteten Steuerschaltung.

Gleiche oder ähnliche Elemente können in den Figuren mit gleichen oder ähnlichen Bezugszeichen versehen sein.

### Ausführungsbeispiel

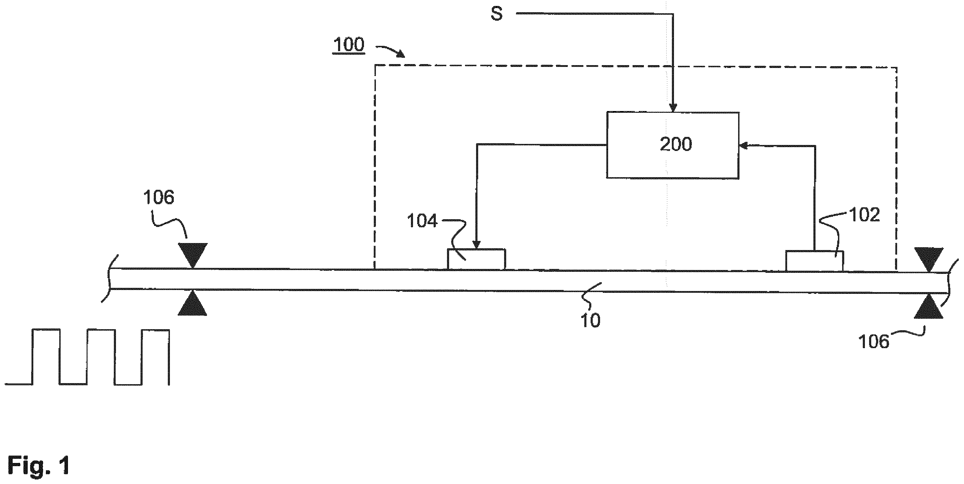

Figur 1 zeigt eine schematische Darstellung einer exemplarischen Vorrichtung 100 zur Dämpfung von Schwingungen in von modulierten Strömen durchflossenen elektrischen Leitungen 10. In dem in Figur 1 gezeigten Beispiel ist die Leitung 10 an zwei Fixierpunkten 106 mit einer in der Figur nicht gezeigten Struktur verbunden. Zwischen den Fixierpunkten 106 kann die Leitung ihre Lage verändern, insbesondere quer zu ihrer Längserstreckung schwingen. Die Leitung 10 ist von einem modulierten Strom durchflossen, in der Figur durch die Rechteckwelle angedeutet. Der modulierte Strom führt zu elektromagnetischen Kräften, welche auf die Leitung wirken und diese in Schwingungen versetzen können. Je nach Frequenz und Stärke des modulierten Stroms kann die Leitung 10 zwischen den Fixierpunkten 106 mehr oder weniger stark schwingen und dabei einen hörbaren Schall erzeugen. Auch ein Anschlägen an die Struktur mit der Frequenz der Schwingung ist möglich. Die Vorrichtung 100, in der Figur durch die in der gestrichelten Umrandung angeordneten Komponenten gebildet, umfasst mindestens einen Schall- oder Schwingungsaufnehmer 102, der von einer Leitung 10 ausgehende Schwingungen oder Schall aufnimmt und ein entsprechendes Signal an eine Steuerschaltung 200 anlegt. Steuerschaltung 200 analysiert das von dem einen oder den mehreren Schall- oder Schwingungsaufnehmern angelegte Signal bzw. die Signale und legt ein Steuersignal an einen oder mehrere Aktuatoren 104 an, welche jeweils eine entsprechende, auf die Leitung 10 wirkende Kraft ausüben, die der Schwingung der Leitung 10 entgegenwirkt. Der Steuerschaltung 200 ist außerdem ein Signal S zugeführt, welches von einer in der Figur nicht gezeigten, den Strom durch die Leitung 10 modulierenden Steuereinrichtung ausgegeben wird, und welches eine Information über die Stromstärke und die Modulation des Stroms überträgt.

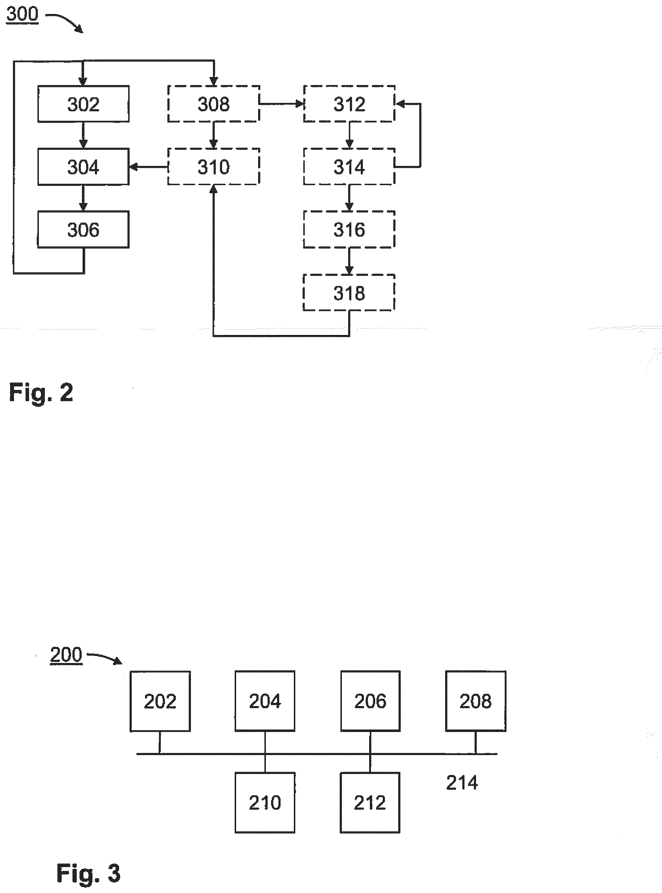

Figur 2 zeigt ein Flussdiagramm eines Ausführungsbeispiels des erfindungsgemäßen Verfahrens 300. In Schritt 302 werden Schwingungen der Leitung 10 mittels mindestens eines Schall- oder Schwingungsaufnehmers erfasst. In Schritt 304 werden Steuersignale für mindestens einen Aktuator 104 erzeugt, die in Schritt 306 ausgegeben werden.

Zusätzlich kann in einem optionalen Schritt 308 ein Signal S empfangen werden, welches Informationen über eine Stromstärke und eine Modulation des in der Leitung 10 fließenden Stroms bereitstellt. Anhand des Signals S werden in Schritt 310 Steuersignale für mindestens einen Aktuator aus einer Korrelationstabelle ausgewählt, und dem Erzeugen in Schritt 304 zusätzlich zugrunde gelegt. Hiermit kann bereits bei Beginn des modulierten Stromflusses ein geeignetes Steuersignal an mindestens einen Aktuator angelegt werden, so dass die Schwingung der Leitung schneller gedämpft werden kann. Eine kontinuierliche Regelung kann dennoch weiter erfolgen.

Die Korrelationstabelle kann in einer Lernphase mit Daten befüllt werden. Hierzu kann, ausgehend von Schritt 308 in Schritt 312 ein Frequenzsweep an mindestens einen Aktuator angelegt werden, während in Schritt 314 Schwingungen der Leitung erfasst werden. Der Frequenzsweep kann mit geänderter Amplitude des Steuersignals des mindestens einen Aktuators wiederholt werden. In Schritt 316 wird ein Steuersignal aus dem zuvor erzeugten Kennfeld ermittelt, bei welchem die Schwingungen der Leitung 10 maximal gedämpft werden, welches in Schritt 318 in der Korrelationstabelle gespeichert wird und für die Auswahl in Schritt 310 bereitsteht.

Figur 3 zeigt ein exemplarisches Blockdiagramm einer zur Ausführung eines oder mehrerer Aspekte des erfindungsgemäßen Verfahrens eingerichteten Steuerschaltung 200. Steuerschaltung 200 umfasst neben einem Mikroprozessor 202 flüchtigen und nichtflüchtigen Speicher 204 bzw. 206, mindestens einen Steuerausgang 208, mindestens einen Mikrofoneingang 210 sowie optional mindestens einen Signaleingang 212. Die Komponenten der Steuerschaltung 200 sind über eine oder mehrere Datenverbindungen oder - busse 214 kommunikativ miteinander verbunden. Der nichtflüchtige Speicher 206 enthält Computerprogramminstruktionen die, wenn sie von dem Mikroprozessor 202 ausgeführt werden, die Steuerschaltung 200 der Vorrichtung 100 zur Ausführung des erfindungsgemäßen Verfahrens 300 einrichten.

### Bezugszeichenliste

| | | | |
|---|---|---|---|
| 10 | Leitung | 214 | Datenverbindung/-bus |
| 100 | Vorrichtung | 300 | Verfahren |
| 102 | Schall- /Schwingungsaufnehmer | 302 | Erfassen |
| | | 304 | Erzeugen |
| 104 | Aktuator | 306 | Ausgeben |
| 106 | Fixierpunkt | 308 | Empfangen |
| 200 | Steuerschaltung | 310 | Auswählen |
| 202 | Mikroprozessor | 312 | Anlegen |
| 204 | flüchtiger Speicher | 314 | Erfassen |
| 206 | nichtflüchtiger Speicher | 316 | Ermitteln |
| 208 | Steuerausgang | 318 | Speichern |
| 210 | Mikrofoneingang | S | Signal |
| 212 | Signaleingang | | |

## Patentansprüche

1. Vorrichtung (100) zur Dämpfung von mechanischen Schwingungen in von modulierten Strömen durchflossenen elektrischen Leitungen (10) umfassend mindestens einen zu der Leitung (10) hin ausgerichteten oder an der Leitung befestigen Schall- oder Schwingungsaufnehmer (102), mindestens einen mit der Leitung verbundenen Aktuator (104) und eine Steuerschaltung (106), welcher über jeweilige Signalleitungen (108) von dem mindestens einen Schall- oder Schwingungsaufnehmer (102) erzeugte, Schall oder Schwingungen repräsentierende Signale zugeführt sind, und welche über jeweilige Steuerleitungen (110) den mindestens einen Aktuator (104) so ansteuert, dass dieser der Schwingung der Leitung (10) entgegenwirkt, **dadurch gekennzeichnet, dass** der mindestens eine Schall- oder Schwingungsaufnehmer (102) ein optisches Mikrofon umfasst, welches eine Ortsauflösung der Schwingungsamplitude entlang zumindest eines Teils der Leitung (10) ermöglicht, und dass die Steuerschaltung (106) dazu eingerichtet ist, den mindestens einen Aktuator (104) so anzusteuern, dass die maximale Schwingungsamplitude verringert wird..

2. Vorrichtung (100) nach Anspruch 1, wobei der mindestens eine Aktuator (104) einen elektromagnetischen oder piezoelektrischen Antrieb aufweist.

3. Vorrichtung (100) nach Anspruch 1 oder 2, wobei der mindestens eine Aktuator (104) so an einer Struktur angebracht ist, an oder in der die Leitung verlegt ist, dass von dem Aktuator (104) ausgehende oder in diesen eingeleitete Schwingungen nur gedämpft in die Struktur eingeleitet werden oder zuvor ausgelöscht werden.

4. Vorrichtung (100) nach einem der vorhergehenden Ansprüche, wobei der Steuerschaltung (106) ein Signal zugeführt ist, welches Informationen über die Pulsfrequenz, die Pulsdauer und/oder die Stromstärke des in der Leitung (10) fließenden elektrischen Stroms repräsentiert, und wobei die Steuerschaltung (106) dazu eingerichtet ist, auf Basis des Signals einen jeweiligen Aktuator (104) mit einer Frequenz und/oder Phase anzuregen, welche der durch den Strom hervorgerufenen Schwingung entgegenwirkt.

5. Vorrichtung (100) nach Anspruch 4, wobei die Steuerschaltung (106) dazu eingerichtet ist, den mindestens einen Aktuator (104) in einer Lernphase mit einem Frequenzsweep anzusteuern, und aus dem Informationen über den in der Leitung (10) fließenden Strom repräsentierenden Signal und der von dem mindestens einen Schall- oder Schwingungsaufnehmer (102) aufgenommenen Amplitude und Frequenz der Schwingung der Leitung (10) eine Korrelation zu bilden, welche für eine bestimmte Pulsfrequenz, Amplitude und/oder Pulsdauer ein Ansteuersignal für den mindestens einen Aktuator (104) enthält, das eine Dämpfung der Schwingung der Leitung (10) bewirkt.

6. Verfahren (300) zur Dämpfung von Schwingungen in von modulierten Strömen durchflossenen elektrischen Leitungen (10) mittels einer Vorrichtung (100) nach einem der Ansprüche 1 bis 5, umfassend:
- ortsaufgelöstes Erfassen (302) von Schwingungen der Leitung (10) mittels mindestens eines Schall- oder Schwingungsaufnehmers (102),
- Erzeugen (304) von Steuersignalen für mindestens einen Aktuator (104), und
- Ausgeben (306) der Steuersignale.

7. Verfahren (300) nach Anspruch 6, außerdem umfassend:
- Empfangen (308) eines Signals (S), welches Informationen über eine Stromstärke und eine Modulation des in der Leitung (10) fließenden Stroms bereitstellt,
- Auswählen (310) von Steuersignalen für mindestens einen Aktuator (104) aus einer Korrelationstabelle,
- Erzeugen (304) von Steuersignalen für mindestens einen Aktuator (104), und
- Ausgeben (306) der Steuersignale.

8. Verfahren (300) nach Anspruch 6 oder 7, außerdem umfassend, in einer Lernphase:
- Empfangen (308) eines Signals (S), welches Informationen über eine Stromstärke und eine Modulation des in der Leitung (10) fließenden Stroms bereitstellt,
- Anlegen (312) eines Frequenzsweeps an mindestens einen Aktuator (104),
- Erfassen (314) von Schwingungen der Leitung (10) mittels des mindestens einen Schall- oder Schwingungsaufnehmers (102),
- Wiederholen des Frequenzsweeps mit einer geänderten Amplitude des Steuersignals des mindestens einen Aktuators,
- Ermitteln (316) eines Steuersignals, bei dem die Schwingungen der Leitung (10) maximal gedämpft werden, und
- Speichern (318) des Steuersignals und der Stromstärke und Modulation des Stroms in einer Korrelationstabelle.

9. Computerprogrammprodukt umfassend Programminstruktionen, die bei der Ausführung des Programms durch einen Mikroprozessor (202) einer Steuerschaltung (200) einer Vorrichtung (100) nach einem der Ansprüche 1 bis 5 dazu veranlassen, das Verfahren nach einem oder mehreren der Ansprüche 6 bis 8 auszuführen.

10. Computerlesbares Medium, auf dem das Computerprogrammprodukt nach Anspruch 9 gespeichert ist.

11. Elektro- oder Hybridfahrzeug mit einer Vorrichtung nach einem der Ansprüche 1 bis 5.

## Claims

1. A device (100) for damping mechanical vibrations in electric lines (10) through which modulated currents flow comprising at least one sound or vibration sensor (102) aligned towards line (10) or fastened to the line, at least one actuator (104) connected to the line and a control circuit (106), to which signals representing sound or vibrations generated by the at least one sound or vibration sensor (102) are fed via respective signal lines (108), and which actuates the at least one actuator (104) via respective control lines (110) so that said actuator counteracts the vibration of the line (10), **characterized in that** the at least one sound or vibration sensor (102) comprises an optical microphone, which enables a local resolution of the vibration amplitude along at least one part of the line (10), and that the control circuit (106) is set up to actuate the at least one actuator (104) so that the maximum vibration amplitude is reduced.

2. The device (100) according to claim 1, wherein the at least one actuator (104) has an electromagnetic or piezoelectric drive.

3. The device (100) according to claim 1 or 2, wherein the at least one actuator (104) is attached to a structure, on or in which the line is laid, so that vibrations emanating from the actuator (104) or introduced into the latter are only introduced into the structure in damped form or are extinguished beforehand.

4. The device (100) according to any one of the preceding claims, wherein a signal is fed to the control circuit (106, which represents information about the pulse frequency, the pulse duration and/or the current strength of the electric current flowing in the line (10), and wherein the control circuit (106) is set up to excite a respective actuator (104) with a frequency and/or phase on the basis of the signal, which counteracts the vibration caused by the current.

5. The device (100) according to claim 4, wherein the control circuit (106) is set up to actuate the at least one actuator (104) in a learning phase with a frequency sweep, and to form a correlation from the signal representing information about the current flowing in the line (10) and the amplitude and frequency of the vibration of the line (10) recorded by the at least one sound or vibration sensor (102), which for a certain pulse frequency, amplitude and/or pulse duration contains an actuation signal for the at least one actuator (104), which causes a damping of the vibration of the line (10).

6. A method (300) for damping vibrations in electric lines (10) through which modulated currents flow by means of a device (100) according to any one claims 1 to 5, comprising:
- locally resolved detection (302) of vibrations of the line (10) by means of at least one sound or vibration sensor (102),
- generating (304) control signals for at least one actuator (104), and
- outputting (306) the control signals.

7. The method (300) according to claim 6, also comprising:
- receiving (308) a signal (S), which provides information about a current strength and a modulation of the current flowing in the line (10),
- selecting (310) control signals for at lest one actuator (104) from a correlation table,
- generating (304) control signals for at least one actuator (104), and
- outputting (306) the control signals.

8. The method (300) according to claim 6 or 7, also comprising, in a learning phase:
- receiving (308) a signal (S), which provides information about a current strength and a modulation of the current flowing in the line (10),
- applying (312) a frequency sweep to at least one actuator (104),
- detecting (314) vibrations of line (10) by means of the at least one sound or vibration sensor (102),
- repeating the frequency sweep with a changed amplitude of the control signal of the at least one actuator,
- determining (316) a control signal, in which the vibrations of line (10) are maximally damped, and
- saving (318) the control signal and the current strength and modulation of the current in a correlation table.

9. A computer program product comprising program instructions which, when the program is executed by a microprocessor (202) of a control circuit (200) of a device (100) according to any one of claims 1 to 5, cause the method according to one or more of claims 6 to 8 to be executed.

10. A computer-readable medium, on which the computer program product according to claim 9 is saved.

11. An electric or hybrid vehicle with a device according to any one of claims 1 to 5.

## Revendications

1. Dispositif (100) pour l'amortissement de vibrations mécaniques dans des conduites électriques (10) traversées par des courants modulés ; comprenant au moins un enregistreur de bruit ou de vibrations (102) orienté en direction de la conduite (10) ou fixé à la conduite, au moins un actionneur (104) relié à la conduite et un circuit de commande (106) qui contrôle, par l'intermédiaire de conduites de signalisation (108) respectives, les signaux générés par l'au moins un enregistreur de bruit ou de vibrations (102) et représentant le bruit ou les vibrations et qui contrôle, par l'intermédiaire de conduites de commande (110) respectives, l'au moins un actionneur (104), de sorte que celui-ci agit contre les vibrations de la conduite (10), **caractérisé en ce que** l'au moins un absorbeur de bruit ou de vibrations (102) comprend un microphone optique qui permet une résolution de localisation de l'amplitude des vibrations le long d'au moins une partie de la conduite (10) et **en ce que** le circuit de commande (106) est conçu pour contrôler l'au moins un actionneur (104) de sorte que l'amplitude de vibration maximale est réduite.

2. Dispositif (100) selon la revendication 1, dans lequel l'au moins un actionneur (104) comprend un entraînement électromagnétique ou piézoélectrique.

3. Dispositif (100) selon la revendication 1 ou 2, dans lequel l'au moins un actionneur (104) est monté sur une structure sur ou dans laquelle la conduite est posée, de sorte que les vibrations provenant de l'actionneur (104) ou introduites dans celui-ci sont introduites de façon amortie dans la structure ou sont auparavant éliminées.

4. Dispositif (100) selon l'une des revendications précédentes, dans lequel, dans le circuit de commande (106), est introduit un signal qui représente des informations concernant la fréquence d'impulsion, la durée d'impulsion et/ou l'intensité du courant électrique s'écoulant dans la conduite (10) et dans lequel le circuit de commande (106) est conçu pour exciter, sur la base du signal, un actionneur (104) respectif avec une fréquence et/ou une phase qui agit contre les vibrations provoquées par le courant.

5. Dispositif (100) selon la revendication 4, dans lequel le circuit de commande (106) est conçu pour contrôler l'au moins un actionneur (104) dans une phase d'apprentissage avec un balayage de fréquence et pour établir, à partir des informations concernant le signal représentant le courant s'écoulant dans la conduite (10) et de l'amplitude et de la fréquence des vibrations de la conduite (10) enregistrées par l'au moins un enregistreur de bruit ou de vibrations (102), une corrélation qui contient, pour une fréquence d'impulsion, amplitude et/ou durée d'impulsion déterminée, un signal de commande pour l'au moins un actionneur (104), qui produit un amortissement des vibrations de la conduite (10).

6. Procédé (300) pour l'amortissement des vibrations dans des conduites électriques (10) traversées par des courants modulés au moyen d'un dispositif (100) selon l'une des revendications 1 à 5, comprenant :
- la mesure avec résolution de localisation (302) de vibrations de la conduite (10) au moyen d'au moins un enregistreur de bruit ou de vibrations (102),
- la génération (304) de signaux de commande pour au moins un actionneur (104) et
- l'émission (306) des signaux de commande.

7. Procédé (300) selon la revendication 6, comprenant en outre :
- la réception (308) d'un signal (S) qui met à disposition des informations concernant une intensité de courant et une modulation du courant s'écoulant dans la conduite (10),
- la sélection (310) de signaux de commande pour au moins un actionneur (104) dans une table de corrélation,
- la génération (304) de signaux de commande pour au moins un actionneur (104) et
- l'émission (306) des signaux de commande.

8. Procédé (300) selon la revendication 6 ou 7, comprenant en outre, dans une phase d'apprentissage :
- la réception (308) d'un signal (S) qui met à disposition des informations concernant une intensité de courant et une modulation du courant s'écoulant dans la conduite (10),
- l'application (312) d'un balayage de fréquence à au moins un actionneur (104),
- la mesure (314) de vibrations de la conduite (10) au moyen de l'au moins un enregistreur de bruit ou de vibrations (102),
- la répétition du balayage de fréquence avec une amplitude modifiée du signal de commande de l'au moins un actionneur,
- la détermination (316) du signal de commande pour lequel les vibrations le la conduite (10) sont amorties au maximum et
- l'enregistrement (318) du signal de commande et de l'intensité de courant et de la modulation du courant dans une table de corrélation.

9. Produit de programme informatique comprend des instructions de programme qui, lors de l'exécution du programme par un microprocesseur (202) d'un circuit de commande (200) d'un dispositif (100) selon l'une des revendications 1 à 5, permettent d'exécuter le procédé selon l'une ou plusieurs des revendications 6 à 8.

10. Support lisible par un ordinateur sur lequel le produit de programme informatique selon la revendication 9 est enregistré.

11. Véhicule électrique ou hybride avec un dispositif selon l'une des revendications 1 à 5.
